# FASCICULE DE BREVET EUROPEEN

(11) **EP 1 882 096 B1**
(45) Date de publication et mention de la délivrance du brevet: **23.03.2011**
(21) Numéro de dépôt: 06764598.6
(22) Date de dépôt: 11.05.2006
(51) Int. Cl.: F02K 1/82, F02K 3/06

(54) **PROCEDE POUR REDUIRE LES EMISSIONS SONORES A L'ARRIERE D'UN TURBOMOTEUR ET TURBOMOTEUR AINSI PERFECTIONNE**
VERFAHREN ZUR REDUKTION VON GERÄUSCHEMISSIONEN AUF DER RÜCKSEITE EINES TURBOMOTORS UND AUF DIESE WEISE VERBESSERTER TURBOMOTOR
METHOD OF REDUCING NOISE EMISSIONS AT THE REAR OF A TURBOFAN ENGINE AND TURBOFAN ENGINE THUS IMPROVED

(30) Priorité: 18.05.2005 FR 0504963
(43) Date de publication de la demande: 30.01.2008
(73) Titulaire: AIRBUS OPERATIONS (SAS), 31060 Toulouse (FR)
(72) Inventeur: PRAT, Damien, F-31490 Leguevin (FR); CROSTA, Franck, F-31770 Colomiers (FR)
(74) Mandataire: Bonnetat, Christian
(86) Numéro de dépôt international: PCT/FR2006/001052
(87) Numéro de publication internationale: WO 2006/123035

(56) Documents cités:
- US-A1- 2002 139 120
- US-A1- 2004 074 224

## Description

La présente invention concerne un procédé pour réduire les émissions sonores à l'arrière d'un turbomoteur à double flux pour aéronef, ainsi qu'un turbomoteur perfectionné par la mise en oeuvre de ce procédé.

On sait que des turbomoteurs à double flux comportent une nacelle délimitant à l'avant une entrée d'air et contenant une soufflante de flux froid, un générateur central de flux chaud et un canal de soufflante à section annulaire pourvu d'une tuyère pour le flux froid, ledit canal de soufflante étant formé entre un capot interne entourant ledit générateur central de flux chaud et la face tubulaire interne d'un revêtement d'atténuation acoustique à section annulaire porté intérieurement par un capot externe de soufflante formant l'arrière de ladite nacelle, ledit revêtement comportant une partie avant, disposée en amont de ladite tuyère et présentant une épaisseur optimale pour l'atténuation acoustique du bruit engendré par ladite soufflante et véhiculé par ledit flux froid, ainsi qu'une partie arrière, contiguë à ladite partie avant et disposée de part et d'autre du col de ladite tuyère, ladite partie arrière de revêtement présentant une épaisseur décroissant en direction du bord arrière dudit capot externe de soufflante délimitant l'orifice annulaire d'éjection dudit flux froid, et ladite partie avant de revêtement ayant, au voisinage de sa jonction avec ladite partie arrière de revêtement, une zone convergente dans laquelle sa face tubulaire interne commence à converger en direction de ladite tuyère.

Puisque la partie arrière dudit revêtement d'atténuation acoustique présente une épaisseur décroissante inférieure à ladite épaisseur optimale de la partie avant -sauf éventuellement à la jonction avec celle-ci- cette partie arrière ne peut présenter des caractéristiques d'atténuation optimales.

Par ailleurs, la forme de la face tubulaire interne du revêtement d'atténuation acoustique, notamment en regard de ladite tuyère -c'est-à-dire au niveau de ladite partie arrière- est déterminée pour que, en combinaison avec la forme dudit capot interne du générateur central de flux chaud, les performances de ladite tuyère -et donc celles dudit turbomoteur- soient optimales. On ne peut donc modifier la forme de ladite face tubulaire interne du revêtement d'atténuation acoustique sans dégrader les performances du turbomoteur.

La demanderesse a cependant trouvé que, sous certaines conditions, il était possible d'augmenter largement l'atténuation acoustique de la partie arrière dudit revêtement en en modifiant la forme, tout en ne dégradant que faiblement, de manière acceptable, les performances du turbomoteur.

A cette fin, selon l'invention, le procédé selon la revendication 1 pour réduire les émissions sonores à l'arrière d'un turbomoteur à double flux du type rappelé ci-dessous est remarquable en ce que :
- on détermine une zone critique du canal de soufflante, commençant audit col de tuyère et se prolongeant vers l'avant, dans laquelle toute éventuelle modification géométrique dudit canal de soufflante, et donc de la face tubulaire interne de la partie arrière de revêtement, est impossible sans exiger une modification des paramètres de ladite tuyère ;
- dans ladite zone convergente de la partie avant de revêtement, on modifie la face tubulaire interne dans le sens d'une augmentation progressive de l'épaisseur dudit revêtement en direction de ladite partie arrière de revêtement et on poursuit cette modification progressive dans la face tubulaire interne de la partie arrière de revêtement contiguë jusqu'à obtenir une zone de celle-ci à épaisseur accrue dans laquelle l'épaisseur est au moins approximativement égale à ladite épaisseur optimale ; et
- on raccorde l'extrémité arrière de ladite zone à épaisseur accrue à l'extrémité avant de ladite zone critique par une face tubulaire interne à profil d'inflexion.

Ainsi, grâce à l'invention, on augmente les propriétés d'atténuation acoustique de ladite partie arrière de revêtement en communiquant à la zone avant de celle-ci -zone avant qui dans certains cas peut présenter une longueur axiale de l'ordre du quart de la longueur axiale totale de ladite partie arrière de revêtement- une épaisseur égale à ladite épaisseur optimale de la partie avant de revêtement.

On remarquera que le document US 2004/074224 A1 décrit un turbomoteur à double flux comprenant une nacelle délimitant à l'avant une entrée d'air et contenant une soufflante de flux froid, un générateur central de flux chaud, un canal de soufflante à section annulaire pourvu d'une tuyère pour le flux froid, ledit canal de soufflante étant formé entre un capot interne entourant ledit générateur central de flux chaud et la face tubulaire interne d'un capot externe de soufflante formant l'arrière de ladite nacelle, la paroi du capot externe présentant une épaisseur optimale pour l'atténuation acoustique du bruit engendré par ladite soufflante et véhiculé par ledit flux froid, ainsi qu'une partie arrière, contiguë à ladite partie avant et disposée de part et d'autre du col de ladite tuyère, ladite partie arrière présentant une épaisseur décroissant en direction du bord arrière dudit capot externe de soufflante, et ladite partie avant de la paroi ayant, au voisinage de sa jonction avec ladite partie arrière, une zone convergente dans laquelle sa face tubulaire interne commence à converger en direction de ladite tuyère, l'épaisseur de la paroi étant progressivement augmentée jusqu'à un maximum pour définir une zone à épaisseur accrue, un profil d'inflexion raccordant l'extrémité arrière de la zone à épaisseur accrue à l'avant d'une zone avec épaisseur décroissante.

Par ailleurs, le document US 2002/139120 A1 décrit un dispositif d'échappement pour turbine à gaz comportant un corps central et une enveloppes biconiques, pourvus de revêtements d'atténuation acoustique et délimitant entre eux un conduit annulaire coudé.

Dans le procédé conforme à la présente invention, l'étendue de ladite zone critique est de préférence déterminée par le fait que le nombre de Mach du flux froid y passe d'environ 0,8 (à l'avant) à environ 1 (au col). Toute modification géométrique de la face tubulaire interne dudit revêtement d'atténuation acoustique dans cette zone critique doit être évitée, car elle modifierait de façon non négligeable les paramètres de la tuyère.

Par ailleurs, en ce qui concerne la modification de forme progressive du revêtement à atténuation acoustique, il est avantageux qu'elle commence dans ladite zone convergente, dans laquelle le flux froid accélère, puisque ladite modification commence à un nombre de Mach relativement faible, par exemple compris entre 0,4 et 0,55. Il en résulte que, de ladite zone convergente de la partie avant de revêtement à l'extrémité avant de la zone critique, la modification de forme (y compris ladite face tubulaire interne à profil d'inflexion) a lieu dans une plage de nombres de Mach comprise entre environ 0,45 et 0,8.

De ce qui précède, on remarque que le turbomoteur à double flux perfectionné selon le procédé de l'invention et comportant les caractéristiques de la revendication 5 est remarquable en ce que le revêtement d'atténuation acoustique à section annulaire porté intérieurement par ledit capot externe de soufflante comporte un profil d'inflexion entre une zone amont, dans laquelle l'épaisseur dudit revêtement est au moins approximativement égale à une épaisseur optimale E, et ladite zone critique de la tuyère.
Les figures du dessin annexé feront bien comprendre comment l'invention peut être réalisée. Sur ces figures, des références identiques désignent des éléments semblables.
La figure 1 est une coupe axiale schématique d'un turbomoteur à double flux.
La figure 2 est une vue en coupe schématique agrandie illustrant le revêtement tubulaire d'atténuation acoustique connu prévu dans le canal de soufflante du turbomoteur de la figure 1.
La figure 3 montre, en vue semblable à la figure 2, le revêtement tubulaire d'atténuation acoustique perfectionné conformément à la présente invention.
La figure 4 est une vue agrandie, dilatée orthogonalement à l'axe dudit turbomoteur, d'une partie de la figure 3 au niveau du perfectionnement du revêtement tubulaire d'atténuation acoustique conforme à la présente invention.

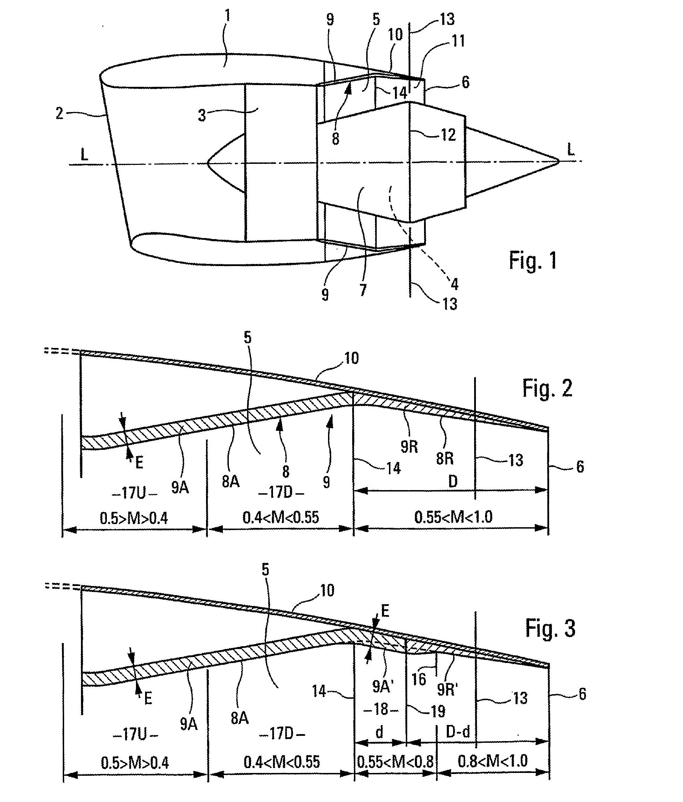

Le moteur à double flux connu pour aéronef, montré schématiquement sur la figure 1 en coupe passant par son axe longitudinal L-L, comporte une nacelle 1 délimitant, à l'avant, une entrée d'air 2. La nacelle 1 contient une soufflante 3, un générateur central de flux chaud 4 et un canal de soufflante annulaire 5 parcouru par le flux froid.

Le canal de soufflante 5 est pourvu d'un orifice d'éjection annulaire 6 correspondant au bord de fuite de la nacelle 1. Ce canal de soufflante 5 est formé entre un capot 7, entourant ledit générateur central de flux chaud 4, et la face interne 8 (voir la figure 2) d'un revêtement tubulaire d'atténuation acoustique 9 porté intérieurement par un capot externe de soufflante 10, formant la partie arrière de ladite nacelle 1.

Dans le canal de soufflante 5, le capot 7 et la face interne 8 forment une tuyère 11, qui débouche par l'orifice d'éjection annulaire 6 et dont le col 12 se trouve dans un plan 13 transverse par rapport à l'axe longitudinal L-L.

Le revêtement tubulaire d'atténuation acoustique 9, par exemple de type connu à alvéoles absorbants, est constitué de deux parties 9A et 9R contiguës, ayant des faces internes respectives 8A et 8R formant ladite face interne 8, et adjacentes le long d'une ligne 14, dont le plan est orthogonal audit axe L-L. La partie avant 9A, disposée bien en amont de la tuyère 11, présente une épaisseur E, au moins approximativement constante, correspondant à une atténuation optimale du bruit engendré par la soufflante 3 et véhiculé par le flux froid circulant dans le canal de soufflante 5. En revanche, la partie arrière 9R, qui se trouve disposée de part et d'autre du col 12 de la tuyère 11 et qui s'étend sur une longueur axiale D, présente une épaisseur décroissant de façon uniforme depuis ladite ligne 14 -où elle est égale à l'épaisseur optimale E- jusqu'à l'orifice d'éjection annulaire 6. Bien entendu, du fait de son épaisseur décroissante, inférieure à la valeur optimale E (sauf sur la ligne 14), la partie arrière 9R ne saurait offrir une atténuation acoustique optimale.

Dans la disposition décrite ci-dessus, le flux froid dans le canal de soufflante est subsonique et tel que :
- en regard de la partie arrière 9R du revêtement d'atténuation acoustique 9, le nombre de Mach passe d'environ 0,55, au niveau de la ligne 14, à environ 1.0, au niveau de l'orifice d'éjection annulaire 6 ; et
- en regard de la partie avant 9A dudit revêtement 9, il existe :
   - une zone amont divergente 17U, dans laquelle ledit flux froid ralentit, le nombre de Mach y passant d'environ 0,5 à environ 0,4 ; et
   - une zone aval convergente 17D, dans laquelle ledit flux froid accélère, le nombre de Mach y passant d'environ 0,4 à environ 0,55.

Comme indiqué ci-dessus, l'objet de la présente invention est d'augmenter, en direction de l'arrière, la partie avant 9A d'épaisseur optimale E d'une zone 9A' de longueur d pour réduire la partie arrière 9R à épaisseur décroissante à une zone 9R' de longueur réduite D-d (voir la figure 3), tout en ne dégradant que de façon négligeable les performances du turbomoteur.

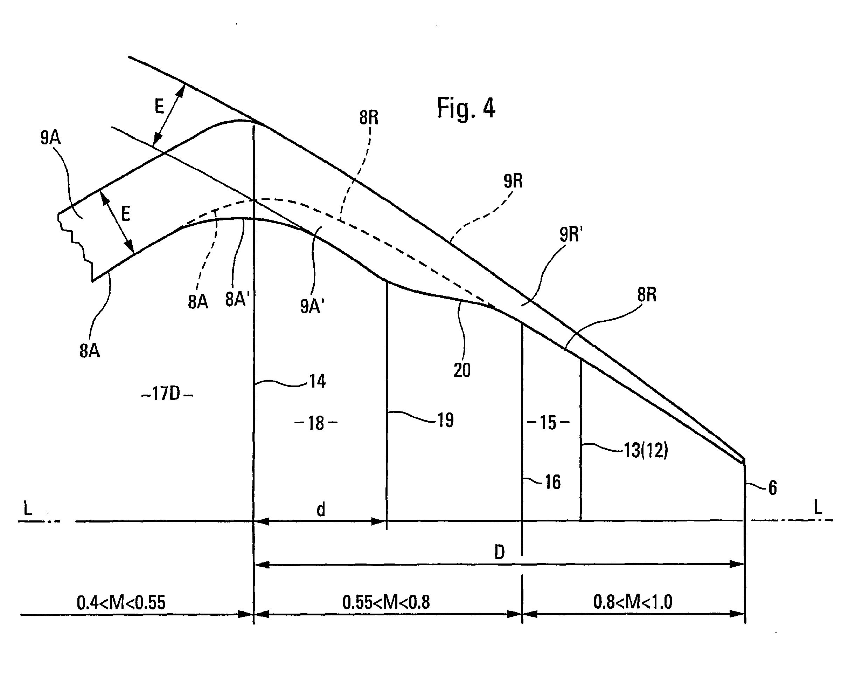

Pour ce faire, comme l'illustre à plus grande échelle la figure 4 :
- on commence par déterminer une zone critique 15 du canal de soufflante 5, commençant au plan 13 du col de tuyère 12 et se prolongeant vers l'avant jusqu'à une limite avant 16, zone critique dans laquelle toute modification géométrique de la face tubulaire interne 8R de la partie arrière de revêtement 9R est impossible sans exiger une modification des paramètres de ladite tuyère 12. La zone critique 15 est par exemple déterminée par le fait que, à ladite limite avant 16, le nombre de Mach du flux froid atteint déjà une valeur au moins approximativement égale à 0,8, pour atteindre une valeur d'environ 1 au col de tuyère 12 ;
- dans la zone aval 17D en regard de la partie avant de revêtement 9A dans laquelle celle-ci commence à converger vers le col de tuyère 12, et dans laquelle le nombre de Mach du flux froid est compris entre environ 0,4 et environ 0,55, on modifie la face tubulaire interne 8A dans le sens d'une augmentation progressive de l'épaisseur (voir la ligne 8A') dudit revêtement, en direction de la partie arrière de revêtement 9 et on poursuit cette augmentation progressive dans la face tubulaire interne de la partie arrière de revêtement contiguë jusqu'à obtenir une zone 18 de celle-ci, de longueur d et à épaisseur accrue, dans laquelle l'épaisseur est au moins égale à ladite épaisseur optimale E ; et
- on raccorde l'extrémité arrière 19 de ladite zone 18 à l'extrémité avant 16 de la zone critique 15 par une face tubulaire interne à profil d'inflexion 20.

Ainsi, la longueur d de la zone 18 est définie par la position du col de tuyère 12, l'étendue axiale de la zone critique 15 et l'étendue axiale de la face tubulaire interne à profil d'inflexion 20. Cette longueur d peut, dans certains cas, être voisine du quart de la longueur D de la partie arrière de revêtement 9R, de sorte que l'on bénéficie d'une augmentation importante d'atténuation acoustique sans pour autant trop dégrader le fonctionnement du turbomoteur.

## Revendications

1. Procédé pour réduire les émissions sonores à l'arrière d'un turbomoteur à double flux pour aéronef, ledit turbomoteur comportant une nacelle (1) délimitant à l'avant une entrée d'air (2) et contenant une soufflante de flux froid (3), un générateur central de flux chaud (4) et un canal de soufflante (5) à section annulaire pourvu d'une tuyère (11) pour le flux froid, ledit canal de soufflante (5) étant formé entre un capot interne (7) entourant ledit générateur central de flux chaud (4) et la face tubulaire interne (8) d'un revêtement d'atténuation acoustique (9) à section annulaire porté intérieurement par un capot externe de soufflante (10) formant l'arrière de ladite nacelle (1), ledit revêtement (9) comportant une partie avant (9A), disposée en amont de ladite tuyère (11) et présentant une épaisseur (E) optimale pour l'atténuation acoustique du bruit engendré par ladite soufflante et véhiculé par ledit flux froid, ainsi qu'une partie arrière (9R), contiguë à ladite partie avant (9A) et disposée de part et d'autre du col (12) de ladite tuyère (11), ladite partie arrière de revêtement (9R) présentant une épaisseur décroissant en direction du bord arrière (6) dudit capot externe de soufflante (10) délimitant l'orifice annulaire d'éjection dudit flux froid, et ladite partie avant de revêtement (9A) ayant, au voisinage de sa jonction avec ladite partie arrière de revêtement (9R), une zone convergente (17D) dans laquelle sa face tubulaire interne (8A) commence à converger en direction de ladite tuyère (11),
**caractérisé en ce que** :
- on détermine une zone critique (15) du canal de soufflante, commençant audit col de tuyère (12) et se prolongeant vers l'avant, dans laquelle toute éventuelle modification géométrique dudit canal de soufflante (5), et donc de la face tubulaire interne (8R) de la partie arrière de revêtement (9R), est impossible sans exiger une modification des paramètres de ladite tuyère (12) ;
- dans ladite zone convergente (17D) de la partie avant de revêtement (9A), on modifie la face tubulaire interne (8A) dans le sens d'une augmentation progressive de l'épaisseur dudit revêtement en direction de ladite partie arrière de revêtement et on poursuit cette modification progressive dans la face tubulaire interne de la partie arrière de revêtement contiguë jusqu'à obtenir une zone (18) de celle-ci à épaisseur accrue dans laquelle l'épaisseur est au moins égale à ladite épaisseur optimale ; et
- on raccorde l'extrémité arrière (19) de ladite zone (18) à épaisseur accrue à l'extrémité avant (16) de ladite zone critique (15) par une face tubulaire interne (20) à profil d'inflexion.

2. Procédé selon la revendication 1,
**caractérisé en ce que** la limite avant (16) de ladite zone critique (15) est définie par le fait que le nombre de Mach du flux froid y est au moins approximativement égal à 0,8.

3. Procédé selon l'une des revendications 1 ou 2,
**caractérisé en ce que**, dans ladite zone convergente (17D) de la partie avant (9A) du revêtement, ladite modification progressive de forme commence lorsque le nombre de Mach du flux froid est compris entre environ 0,4 et environ 0,55.

4. Procédé selon l'une des revendications 1 à 3,
**caractérisé en ce que** ledit profil d'inflexion (20) est prévu pour n'engendrer aucun décollement de la couche limite.

5. Turbomoteur à double flux perfectionné selon le procédé de l'une quelconque des revendications 1 à 4, ledit turbomoteur comportant une nacelle (1) délimitant à l'avant une entrée d'air (2) et contenant une soufflante de flux froid (3), un générateur central de flux chaud (4) et un canal de soufflante (5) à section annulaire pourvu d'une tuyère (11) pour le flux froid, ledit canal de soufflante (5) étant formé entre un capot interne (7) entourant ledit générateur central de flux chaud (4) et la face tubulaire interne (8) d'un revêtement d'atténuation acoustique (9) à section annulaire porté intérieurement par un capot externe de soufflante (10) formant l'arrière de ladite nacelle (1), ledit revêtement (9) comportant une partie avant (9A), disposée en amont de ladite tuyère (11) et présentant une épaisseur (E) optimale pour l'atténuation acoustique du bruit engendré par ladite soufflante et véhiculé par ledit flux froid, ainsi qu'une partie arrière (9R), contiguë à ladite partie avant (9A) et disposée de part et d'autre du col (12) de ladite tuyère (11), ladite partie arrière de revêtement (9R) présentant une épaisseur décroissant en direction du bord arrière (6) dudit capot externe de soufflante (10) délimitant l'orifice annulaire d'éjection dudit flux froid, et ladite partie avant de revêtement (9A) ayant, au voisinage de sa jonction avec ladite partie arrière de revêtement (9R), une zone convergente (17D) dans laquelle sa face tubulaire interne (8A) commence à converger en direction de ladite tuyère (111),
où le revêtement d'atténuation acoustique à section annulaire porté intérieurement par ledit capot externe de soufflante (10) comporte un profil d'inflexion (20) entre une zone amont (9A+ 18), dans laquelle l'épaisseur dudit revêtement est au moins approximativement égale à une épaisseur optimale E, et ladite zone critique (15) de la tuyère (12).

## Claims

1. A method of reducing the sound emissions at the rear of a bypass turboengine for aircraft, said turboengine comprising a nacelle (1) delimiting at the front an air inlet (2) and containing a cold stream fan (3), a hot stream central generator (4) and a fan channel (5) with annular section provided with a nozzle (11) for the cold stream, said fan channel (5) being formed between an internal cowl (7) surrounding said hot stream central generator (4) and the internal tubular face (8) of an acoustic attenuation coating (9) with annular section carried internally by an external fan cowl (10) forming the rear of said nacelle (1), said coating (9) comprising a front part (9A), disposed upstream of said nozzle (11) and exhibiting an optimal thickness (E) for the acoustic attenuation of the noise produced by said fan and conveyed by said cold stream, as well as a rear part (9R), contiguous with said front part (9A) and disposed on either side of the throat (12) of said nozzle (11), said rear coating part (9R) exhibiting a thickness which decreases towards the rear edge (6) of said external fan cowl (10) delimiting the annular ejection orifice for said cold stream, and said front coating part (9A) having, in the vicinity of its junction with said rear coating part (9R), a convergent zone (17D) in which its internal tubular face (8A) begins to converge towards said nozzle (11), **characterized in that**:
- a critical zone (15) of the fan channel, beginning at said nozzle throat (12) and extending frontwards is determined, in which any possible geometric modification of said fan channel (5), and therefore of the internal tubular face (8R) of the rear coating part (9R), is impossible without demanding a modification of the parameters of said nozzle (12);
- in said convergent zone (17D) of the front coating part (9A), the internal tubular face (8A) is modified in the sense of a progressive increase in the thickness of said coating towards said rear coating part and this progressive modification in the internal tubular face of the contiguous rear coating part is continued until a zone (18) of the latter with increased thickness is obtained in which the thickness is at least equal to said optimal thickness; and
- the rear end (19) of said zone (18) with increased thickness is linked to the front end (16) of said critical zone (15) by an internal tubular face (20) with inflection profile.

2. The method as claimed in claim 1, **characterized in that** the front boundary (16) of said critical zone (15) is defined by the fact that the Mach number of the cold stream thereat is at least approximately equal to 0.8.

3. The method as claimed in one of claims 1 or 2, **characterized in that**, in said convergent zone (17D) of the front part (9A) of the coating, said progressive shape modification begins when the Mach number of the cold stream lies between about 0.4 and about 0.55.

4. The method as claimed in one of claims 1 to 3, **characterized in that** said inflection profile (20) is designed not to produce any detachment of the boundary layer.

5. A bypass turboengine improved according to the method of any one of claims 1 to 5, said turboengine comprising a nacelle (1) delimiting at the front an air inlet (2) and containing a cold stream fan (3), a hot stream central generator (4) and a fan channel (5) with annular section provided with a nozzle (11) for the cold stream, said fan channel (5) being formed between an internal cowl (7) surrounding said hot stream central generator (4) and the internal tubular face (8) of an acoustic attenuation coating (9) with annular section carried internally by an external fan cowl (10) forming the rear of said nacelle (1), said coating (9) comprising a front part (9A), disposed upstream of said nozzle (11) and exhibiting an optimal thickness (E) for the acoustic attenuation of the noise produced by said fan and conveyed by said cold stream, as well as a rear part (9R), contiguous with said front part (9A) and disposed on either side of the throat (12) of said nozzle (11), said rear coating part (9R) exhibiting a thickness which decreases towards the rear edge (6) of said external fan cowl (10) delimiting the annual ejection orifice for said cold stream, and said front coating part (9A) having, in the vicinity of its junction with said rear coating part (9R), a convergent zone (17D) in which its internal tubular face (8A) begins to converge towards said nozzle (11), wherein the acoustic attenuation coating with annular section carried internally by said external fan cowl (10) comprises an inflection profile (20) between an upstream zone (9A + 18), in which the thickness of said coating is at least approximately equal to an optimal thickness E, and said critical zone (15) of the nozzle (12).

## Patentansprüche

1. Verfahren zur Reduktion der Geräuschemissionen auf der Rückseite eines zweiflutigen Turbomotors für ein Luftfahrzeug, wobei der Turbomotor eine Gondel (1) umfasst, die an der Vorderseite einen Lufteinlass (2) begrenzt und ein Mantelstromgebläse (3), einen zentralen Primärstromgenerator (4) und einen Gebläsekanal (5) mit ringförmigem Querschnitt enthält, der mit einer Düse (11) für den Mantelstrom ausgestattet ist, wobei der Gebläsekanal (5) zwischen einer internen Abdeckhaube (7), die den zentralen Primärstromgenerator (4) umgibt, und der röhrenförmigen Innenseite (8) einer Schalldämpfungsverkleidung (9) mit ringförmigem Querschnitt ausgebildet ist, die innen von einer äußeren Gebläseabdeckhaube (10) getragen wird, welche die Rückseite der Gondel (1) bildet, wobei die Verkleidung (9) einen vorderen Teil (9A), welcher der Düse (11) vorgelagert angeordnet ist und eine optimale Dicke (E) für die Schalldämpfung des Geräuschs aufweist, das von dem Gebläse erzeugt und durch den Mantelstrom übertragen wird, sowie einen rückwärtigen Teil (9R) umfasst, der an den vorderen Teil (9A) angrenzt und zu beiden Seiten des Halses (12) der Düse (11) angeordnet ist, wobei der rückwärtige Teil der Verkleidung (9R) eine Dicke aufweist, die in Richtung des hinteren Rands (6) der äußeren Gebläseabdeckhaube (10) abnimmt, welche die ringförmige Ausstoßöffnung des Mantelstroms begrenzt, und wobei der vordere Teil der Verkleidung (9A) in der Umgebung seiner Verbindung mit dem rückwärtigen Teil der Verkleidung (9R) eine Konvergenzzone (17D) besitzt, in der seine röhrenförmige Innenseite (8A) beginnt, in Richtung der Düse (11) zusammenzulaufen,
**dadurch gekennzeichnet, dass**:
- eine kritische Zone (15) des Gebläsekanals ermittelt wird, die an dem Düsenhals (12) beginnt und sich nach vorne ausdehnt, in der jede eventuelle geometrische Modifizierung des Gebläsekanals (5) und somit der röhrenförmigen Innenseite (8R) des rückwärtigen Teils der Verkleidung (9R) unmöglich ist, ohne dadurch eine Modifizierung der Parameter der Düse (12) erforderlich zu machen;
- in der Konvergenzzone (17D) des vorderen Teils der Verkleidung (9A) die röhrenförmige Innenseite (8A) im Sinne einer progressiven Erhöhung der Dicke der Verkleidung in Richtung des rückwärtigen Teils der Verkleidung modifiziert wird, und diese progressive Modifizierung in der röhrenförmigen Innenseite des angrenzenden rückwärtigen Teils der Verkleidung fortgesetzt wird, bis eine Zone (18) derselben mit einer höheren Dicke erreicht wird, in der die Dicke mindestens gleich der optimalen Dicke ist; und
- das rückwärtige Ende (19) der Zone (18) mit höherer Dicke mit dem vorderen Ende (16) der kritischen Zone (15) über eine röhrenförmige Innenseite (10) mit Wendeprofil verbunden wird.

2. Verfahren nach Anspruch 1,
**dadurch gekennzeichnet, dass** die vordere Grenze (16) der kritischen Zone (15) durch die Tatsache definiert wird, dass die Mach-Zahl des Mantelstroms mindestens ungefähr gleich 0,8 ist.

3. Verfahren nach einem der Ansprüche 1 oder 2,
**dadurch gekennzeichnet, dass** in der Konvergenzzone (17D) des vorderen Teils (9a) der Verkleidung die progressive Modifizierung der Form beginnt, wenn die Mach-Zahl des Mantelstroms zwischen ungefähr 0,4 und ungefähr 0,55 liegt.

4. Verfahren nach einem der Ansprüche 1 bis 3,
**dadurch gekennzeichnet, dass** das Wendeprofil (20) vorgesehen ist, um keinerlei Ablösung der Grenzschicht zu verursachen.

5. Zweiflutiger Turbomotor, der gemäß dem Verfahren nach einem der Ansprüche 1 bis 4 verbessert wurde, wobei der Turbomotor eine Gondel (1) umfasst, die an der Vorderseite einen Lufteinlass (2) begrenzt und ein Mantelstromgebläse (3), einen zentralen Primärstromgenerator (4) und einen Gebläsekanal (5) mit ringförmigem Querschnitt enthält, der mit einer Düse (11) für den Mantelstrom ausgestattet ist, wobei der Gebläsekanal (5) zwischen einer internen Abdeckhaube (7), die den zentralen Primärstromgenerator (4) umgibt, und der röhrenförmigen Innenseite (8) einer Schalldämpfungsverkleidung (9) mit ringförmigem Querschnitt ausgebildet ist, die innen von einer äußeren Gebläseabdeckhaube (10) getragen wird, welche die Rückseite der Gondel (1) bildet, wobei die Verkleidung (9) einen vorderen Teil (9A), welcher der Düse (11) vorgelagert angeordnet ist und eine optimale Dicke (E) für die Schalldämpfung des Geräuschs aufweist, das von dem Gebläse erzeugt und durch den Mantelstrom übertragen wird, sowie einen rückwärtigen Teil (9R) umfasst, der an den vorderen Teil (9A) angrenzt und zu beiden Seiten des Halses (12) der Düse (11) angeordnet ist, wobei der rückwärtige Teil der Verkleidung (9R) eine Dicke aufweist, die in Richtung des hinteren Rands (6) der äußeren Gebläseabdeckhaube (10) abnimmt, welche die ringförmige Ausstoßöffnung des Mantelstroms begrenzt, und wobei der vordere Teil der Verkleidung (9A) in der Umgebung seiner Verbindung mit dem rückwärtigen Teil der Verkleidung (9R) eine Konvergenzzone (17D) besitzt, in der seine röhrenförmige Innenseite (8A) beginnt, in Richtung der Düse (11) zusammenzulaufen, wo die Schalldämpfungsverkleidung mit ringförmigem Querschnitt, die innen von der äußeren Gebläseabdeckhaube (10) getragen wird, ein Wendeprofil (20) zwischen einer vorgelagerten Zone (9A + 18), in der die Dicke der Verkleidung mindestens annähernd gleich einer optimalen Dicke E ist, und der kritischen Zone (15) der Düse (12) umfasst.
